# EUROPEAN PATENT APPLICATION

(11) **EP 2 693 344 A2**
(43) Date of publication of application: **05.02.2014**
(21) Application number: 13178673.3
(22) Date of filing: 31.07.2013
(51) Int. Cl.: G06F 17/21

(54) **Methods, computer readable media, and apparatuses for enabling non-system fonts**

(30) Priority: 03.08.2012 US 201213566112
(71) Applicant: Celartem, Inc., Portland OR 97201 (US)
(72) Inventor: Buckley, Michael, Portland, OR Oregon 97201 (US); Daeuble, Clinton, Portland, OR Oregon 97201 (US); Patsuk-Russell, Cassidy, Portland, OR Oregon 97201 (US); Russell, Steven, Portland, OR Oregon 97201 (US); Slater, Chadlee, Portland, OR Oregon 97201 (US)
(74) Representative: Thompson, Andrew John

(57) **Abstract**

Methods, computer readable media, and apparatuses for enabling non-system fonts are presented. A listing of a plurality of non-system fonts may be provided within an application. Responsive to a selection of one of the plurality of non-system fonts by a user of the application, the one of the plurality of non-system fonts may be enabled within the application.

## Description

### BACKGROUND

Fonts may be provided on a computing device using one or more electronic data files that contain one or more glyphs, characters, or symbols. An operating system (OS) of a computing device may include a library of fonts, which may also be called a library of system fonts because these fonts are installed as part of the OS. System fontscan be managed by the OS and made available for use, for example, by one or more applications executing on the computing device. Users of the computing device can also install additional fonts which the OS may add to the library of system fonts.

Many users, such as graphic designers, may utilize a large number of fonts, a substantial portion of which may not be included in the library of system fonts. Such users may utilize one or more font management applications to assist them in managing this large number of fonts. For example, a font management application may track where fonts are stored, support searching through a user's font library, and assist in resolving font corruption issues. One drawback to traditional font management applications, however, is their inaccessibility from within applications (*e.g.*, design applications) where users may desire to utilize the large number of fonts, including those fonts that are not included in the library of system fonts.

### SUMMARY

The following presents a simplified summary in order to provide a basic understanding of some aspects of the disclosure. This summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of this disclosure relate to enabling non-system fonts. In some embodiments, a listing of non-system fonts may be provided within an application. Responsive to a selection of one of the non-system fonts by a user of the application, the selected non-system font may be enabled within the application. In some embodiments, enabling the selected non-system font within the application may include activating the selected non-system font within an OS on which the application is running. In some embodiments, the selected non-system font may be activated globally within the OS on which the application is running. Alternatively, in some embodiments, the selected non-system font may be activated for use specifically within the application. In some embodiments, enabling the selected non-system font may include installing the selected non-system font within the OS on which the application is running.

Aspects of this disclosure may also relate to notifying the application to update a system fonts menu associated with the application to include the selected non-system font.

Aspects of this disclosure may further relate to applying the selected non-system font to text within the application selected by a user of the application.

Aspects of this disclosure may also relate to providing the listing of non-system fonts within the application. In some embodiments, the listing of non-system fonts may be displayed as part of a system fonts menu associated with the application. Additionally or alternatively, the listing of non-system fonts may be displayed in a menu distinct from a system fonts menu associated with the application.

Other details and features will be described in the sections that follow.

### BRIEF DESCRIPTION OF THE DRAWINGS

The present disclosure is pointed out with particularity in the appended claims. Features of the disclosure will become more apparent upon a review of this disclosure in its entirety, including the drawing figures provided herewith.

Some features herein are illustrated by way of example, and not by way of limitation, in the figures of the accompanying drawings and in which like reference numerals refer to similar elements.

FIG. 1 illustrates an exemplary apparatus or computing device in which one or more aspects of the disclosure may be implemented.

FIG. 2 illustrates an exemplary network environment in which one or more aspects of the disclosure may be implemented.

FIGS. 3A-3C illustrate exemplary user interfaces (UIs) associated with an OS or application in which one or more aspects of the disclosure may be implemented.

FIGS. 4, 5A, and 5B illustrate one or more methods according to one or more aspects of the disclosure.

### DETAILED DESCRIPTION

In the following description of various illustrative embodiments, reference is made to the accompanying drawings, which form a part hereof, and in which is shown, by way of illustration, various embodiments in which aspects of the disclosure may be practiced. It is to be understood that other embodiments may be utilized, and structural and functional modifications may be made, without departing from the scope of the present disclosure.

It is noted that various connections between elements are discussed in the following description. These connections are general and, unless specified otherwise, may be direct or indirect, wired or wireless, and the disclosure is not intended to be limiting in this respect.

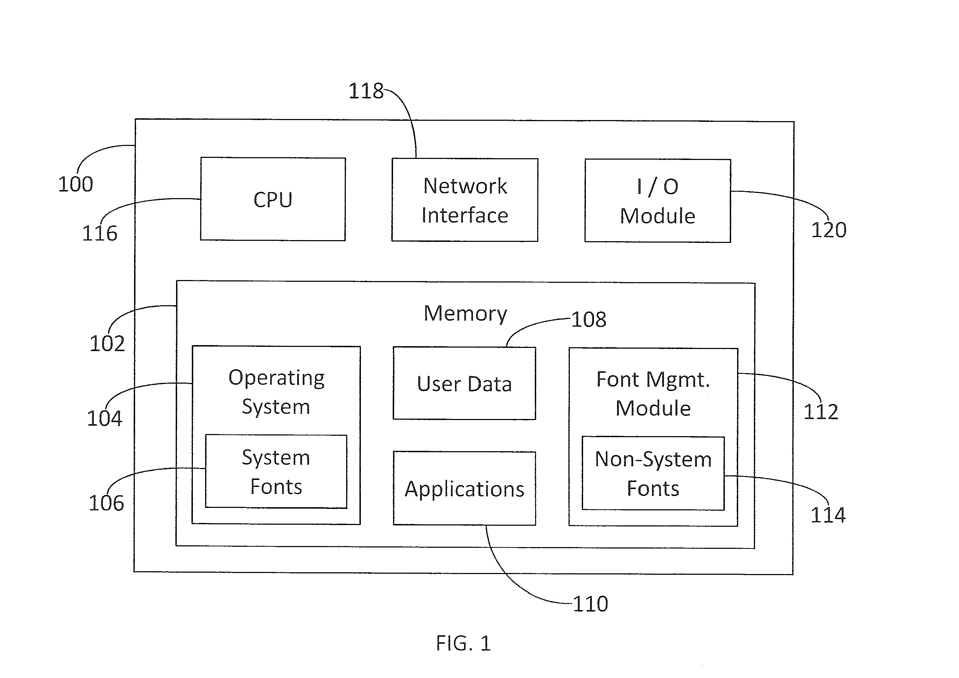

FIG. 1 illustrates an exemplary apparatus or computing device in which one or more aspects of the disclosure may be implemented. Referring to FIG. 1, in one or more configurations, one or more aspects described herein may be implemented as a computer program or a combination of computer programs for use with computer **100** and stored in memory **102.** Computer **100** may be any type of computing device. For example, computer **100** may be a desktop computer, laptop computer, notebook computer, tablet computer, network server, portable computing device, personal digital assistant, smart phone, mobile telephone, distributed computing network device, or any other device having the requisite components or abilities to operate as described herein. By having the requisite components or abilities to operate as described herein, computer **100** may be configured as a special-purpose device according to one or more aspects of the disclosure.

As indicated above, computer **100** may include memory **102.** Memory **102** may include volatile memory or non-volatile memory (*e.g.*, random access memory (RAM), fixed disk, optical disk, holographic storage, removable storage media, flash drive, and the like) for temporarily or permanently storing data or instructions. For example, memory **102** may include OS **104.** OS **104** may be, for example, one or more instances of MICROSOFT WINDOWS or APPLE MAC OS. Aspects of the disclosure are not limited to the specific OSs described above; rather specific examples are given merely for the purpose of illustration, the disclosure contemplating the use of any OS capable of performing aspects of the disclosure described herein. As indicated above OS **104** may include one or more system fonts **106** which may be included with OS **104,** stored within OS **104,** or managed by OS **104** or a font management application provided with OS **104** (*e.g.*, APPLE MAC OS's FONT BOOK, MICROSOFT WINDOWS'S FONT, and the like). As used herein, "system font" designates a font that is managed by an OS (e.g., OS **104)**or a font management application provided with an OS. Memory **102** may also include user data **108.** User data **108** may include one or more files or data created or utilized by a user of computer **100.** Memory **102** may also include applications **110.** Applications **110** may include one or more programs or modules for execution by a user of computer **100.** For example, applications **110** may include one or more design applications (*e.g.*, ADOBE ILLUSTRATOR, ADOBE INDESIGN, ADOBE PHOTOSHOP, QUARKXPRESS, and the like).

Computer **100** may also include one or more processors. For example, computer **100** may include central processing unit (CPU) **116.** CPU **116** may include one or more processors configured to execute one or more programs or modules stored in memory **102.** For example, CPU **116** may be configured to execute one or more of OS **104,** applications **110,** or font management module **112.** Computer **100** may also include network interface **118.** Network interface **118** may include one or more hardware components or software components for enabling computer **100** to communicate with one or more other computing platforms via one or more networks (*e.g*., Internet, local area network (LAN), wide area network (WAN), personal area network (PAN), and the like). For example, network interface **118** may be one or more of an Ethernet card, a wireless network interface, a modem, or a cellular communication interface. Network interface **118** may utilize one or more protocols to manage such communications (*e.g.*, internet protocol (IP), transmission control protocol (TCP), user datagram protocol (UDP), media access control (MAC), Ethernet, and the like). Computer **100** may further include input / output ("I/O") module **120.** I/O module **120** may be configured to receive input from a user of computer **100** or to communicate information to a user of computer **100** via one or more I/O devices (*e.g.*, keyboard, mouse, monitor, display, printer, universal serial bus (USB) ports, serial ports, parallel ports, IEEE 1394/Firewire ports, and the like).

In accordance with one or more aspects of the disclosure, memory **102** may include one or more font management modules. For example, memory **102** may include font management module **112.** Font management module **112** may include one or more modules for managing one or more non-system fonts **114.** As used herein, "non-system font" designates a font that is not managed by an OS or a font management application provided with an OS, but rather is installed by a user separate from the installation of an OS or is managed by a font management application distinct from computer **100**'s OS **104** or a font management application provided with computer **100**'s OS **104.** As will be described in greater detail below, font management module **112** may be configured to provide a listing of non-system fonts within an application (*e.g.*, within one or more of applications **110).** Font management module **112** may further be configured to, responsive to a selection of one of the non-system fonts by a user of the application, enable the selected non-system font within the application. For example, responsive to a selection of one of non-system fonts **114** by a user of computer **100,** font management module **112** may enable the selected font within one or more of applications **110.**

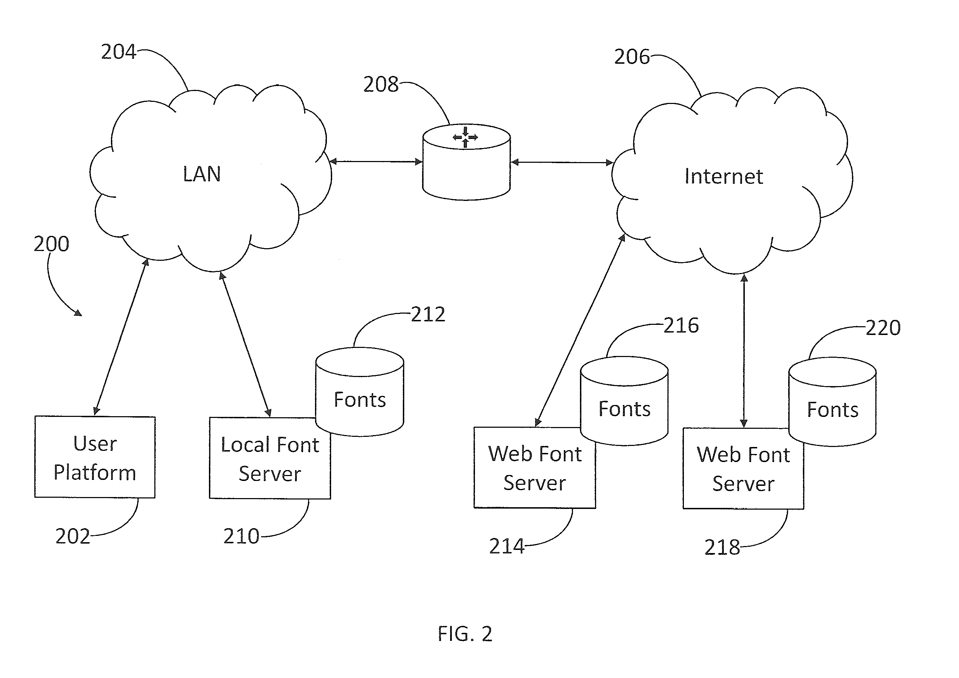

FIG. 2 illustrates an exemplary network environment in which one or more aspects of the disclosure may be implemented. Referring to FIG. 2, network environment **200** may include user platform **202.** User platform **202** may include computer **100.** User platform **202** may be connected to or capable of connecting to LAN **204.** LAN **204** may be connected to one or more additional networks, thereby expanding the connectivity of user platform **202.** For example, LAN **204** may be connected to Internet **206** via router **208.** One or more of the networks within network environment **200** may include one or more font servers which may provide access to one or more font libraries. Such font libraries may include one or more non-system fonts that are not ordinarily available to a user of user platform **202** via its OS. For example, LAN **204** may be associated with an organization with which user platform **202** is affiliated (*e.g.*, a company, university, government agency, or the like). Such an organization may have access to a font library and may utilize a font server to provide access to one or more fonts within its font library to its affiliates. For example, LAN **204** may include local font server **210** which may provide access to one or more fonts within non-system font library **212** to users such as a user of user platform **202.**

Additional font libraries may be accessible to a user of user platform **202.** For example, Internet **206** may include one or more font servers to which a user of user platform **202** maintains a subscription. For example, Internet **206** may include web font server **214** which may provide access to non-system font library **216.** A user of user platform **202** may subscribe to one or more fonts within non-system font library **216** and web font server **214** may provide a user of user platform **202** with access to such fonts via network environment **200.** Additionally or alternatively, Internet **206** may include one or more font servers which maintain publicly available font libraries (*e.g.*, GOOGLE WEB FONTS, and the like). For example, Internet **206** may include web font server **218** which may provide public access to non-system font library **220.** A user of user platform **202** may be aware of the publicly available fonts within non-system font library **220** and web font server **218** may provide a user of user platform **202** with access to such fonts via network environment **200.**

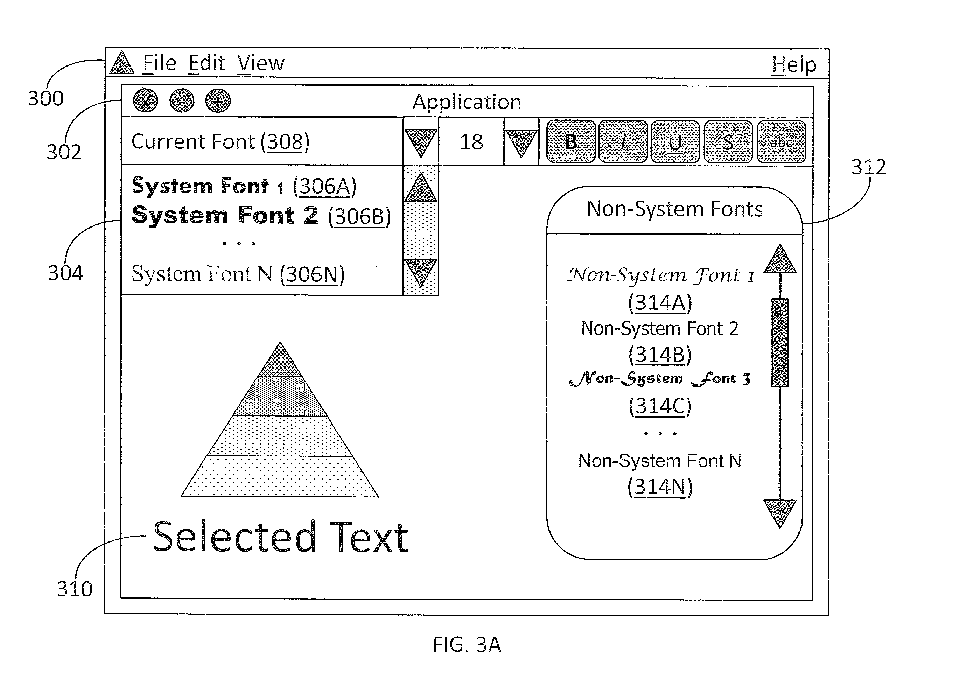

FIGS. 3A-3C illustrate exemplary UIs associated with an OS or application in which one or more aspects of the disclosure may be implemented. Referring to FIG. 3A, UI **300** may correspond to an OS UI and may be generally utilized by a user of computer **100** for communicating commands and input to OS **104,** for example, via I/O module **120.** UI **300** may include one or more menus (*e.g*., "File," "Edit," View," "Help," and the like). Such menus may include one or more options (not illustrated) which may correspond to one or more commands associated with OS **104** or one or more applications **110.** UI **300** may include application UI **302.** Application UI **302** may include one or more menus, toolbars, icons, buttons, and the like for communicating input or commands to one or more applications **110** associated with application UI **302.**

Application UI **302** may include system fonts menu **304** for providing a listing of system fonts or commands (*e.g*., "bold," "italic," "underline," "shadow," "strikethrough," and the like). As indicated above, system fonts menu **304** may include a listing of system fonts (*e.g.*, system fonts **106).** For example, system fonts menu **304** may provide a listing which includes system fonts **306A** and **306B** through **306N.** System fonts menu **304** may indicate which of system fonts **306A** and **306B** through **306N** is currently selected by a user. For example, system fonts menu **304** may indicate current font **308.** Current font **308** may correspond to text selected within application UI **302** by a user. For example, current font **308** may correspond to selected text **310.** A user may change the font of selected text **310** by selecting one of system fonts **306A** or **306B** through **306N.** In response to such a selection, selected text **310** may be changed to the selected system font (*e.g*., one of system fonts **306A** or **306B** through **306N)** and system fonts menu **304** may be updated to reflect the selected system font as current font **308.**

As indicated above, in accordance with one or more aspects of the disclosure, font management module **112** may be configured to provide a listing of non-system fonts (*e.g.*, non-system fonts **114)** within an application, such as one or more of applications **110.** For example, application UI **302** may correspond to one or more of applications **110** and may include a listing of non-system fonts. For example, in some embodiments, application UI **302** may include non-system fonts menu **312.** Non-system fonts menu **312** may include a listing of one or more non-system fonts (*e.g.*, non-system fonts **114).** For example, non-system fonts menu **312** may include a listing of non-system fonts **314A, 314B,** and **314C** through **314N.** In some embodiments, application UI **302** may include a listing of non-system fonts within system fonts menu **304.** For example, system fonts menu **304** may be altered to include a listing of non-system fonts such as non-system fonts **314A, 314B,** and **314C** through **314N** (not illustrated), which may be listed alongside system fonts **306A** and **306B** through **306N.** In such embodiments, non-system fonts **314A, 314B,** and **314C** through **314N** may be designated to distinguish themselves from system fonts **306A** and **306B** through **306N.** In some embodiments, non-system fonts **314A, 314B,** and **314C** through **314N** may be listed in a manner so as to be indistinguishable from system fonts **306A** and **306B** through **306N.** In some embodiments one or more of non-system fonts **314A, 314B,** and **314C** through **314N** or system fonts **306A** and **306B** through **306N** may be listed in What You See Is What You Get (WYSIWYG) format to assist a user in making a font selection. In some embodiments, non-system fonts **314A, 314B,** and **314C** through **314N** may include one or more fonts from more than one non-system font library. For example, non-system fonts **314A, 314B,** and **314C** through **314N** may include one or more non-system fonts from one or more of non-system fonts **114** (associated with font management module **112),** non-system font library **212** (associated with local font server **210),** non-system font library **216** (associated with web font server **214),** and non-system font library **220** (associated with web font server **218).**

As indicated above, in accordance with one or more aspects of the disclosure, font management module **112** may be configured to, responsive to a selection of one of the listed non-system fonts, enable the selected non-system font within the application. For example, a user of computer **100** may desire to utilize one of non-system fonts **314A, 314B,** and **314C** through **314N** (*e.g*., non-system font **314A)** with respect to selected text **310.** Such a user may, for example, select non-system font **314A** from non-system fonts menu **312.** In response to such a selection, font management module **112** may enable non-system font **314A** for use within one or more of applications **110.** In some embodiments, enabling non-system font **314A** for use within one or more of applications **110** may include activating non-system font **314A** within OS **104.** In some embodiments, non-system font **314A** may be activated within OS **104** globally (*i.e.,* non-system font **314A** may be activated within OS **104** for use in any application that is capable of utilizing non-system font **314A** and is running on OS **104).** In some embodiments, non-system font **314A** may be activated within OS **104** on an application-specific basis. For example, non-system font **314A** may be activated for use only within one or more of applications **110** (*e.g*., one or more of applications **110** that corresponds to application UI **302).** In some embodiments, activating non-system font **314A** within OS **104** may include font management module **112** making one or more Application Program Interface (API) calls to OS **104.** For example, such API calls may include information indicating where non-system font **314A** is stored and whether non-system font **314A** should be activated globally or on an application-specific basis, and, if on an application-specific basis, for which specific applications. In some embodiments, enabling non-system font **314A** may include installing non-system font **314A** within OS **104.** For example, non-system font **314A** may reside in a remote location (*e.g*., in non-system font library **220)** and font management module **112** may retrieve non-system font **314A** from non-system font library **220** via web font server **218** and install non-system font **314A** within OS **104.** It will be appreciated, that installing non-system font **314A** within OS **104** may not require physically storing non-system font **314A** alongside system fonts **106.** Rather, non-system font **314A** may be physically stored anywhere within memory **102** (e.g., alongside non-system fonts **114)** and font management module **112** may store one or more records indicating where non-system font **314A** is stored.

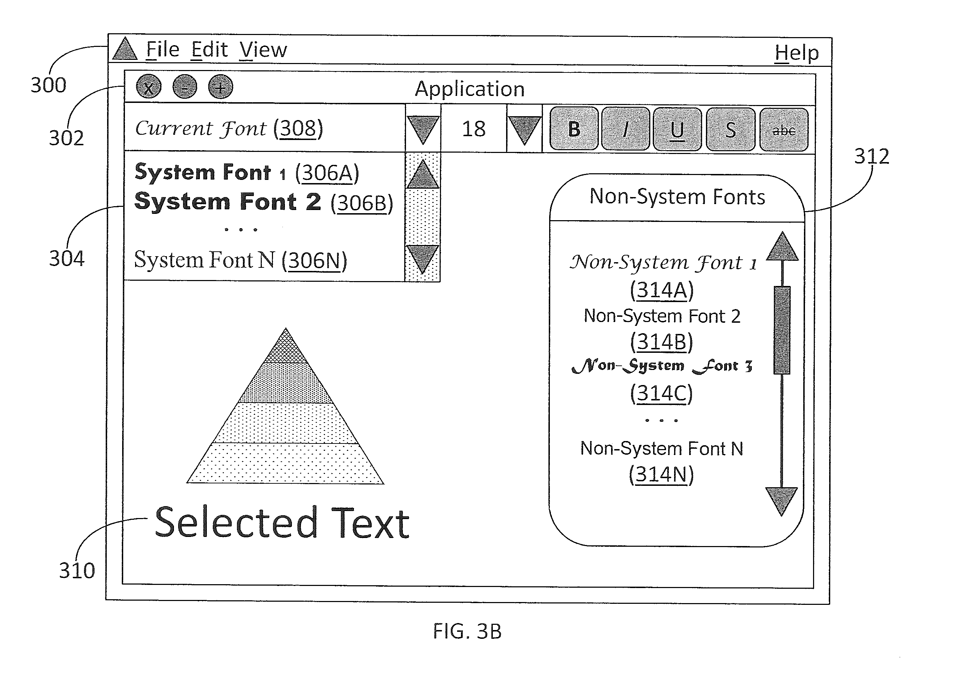

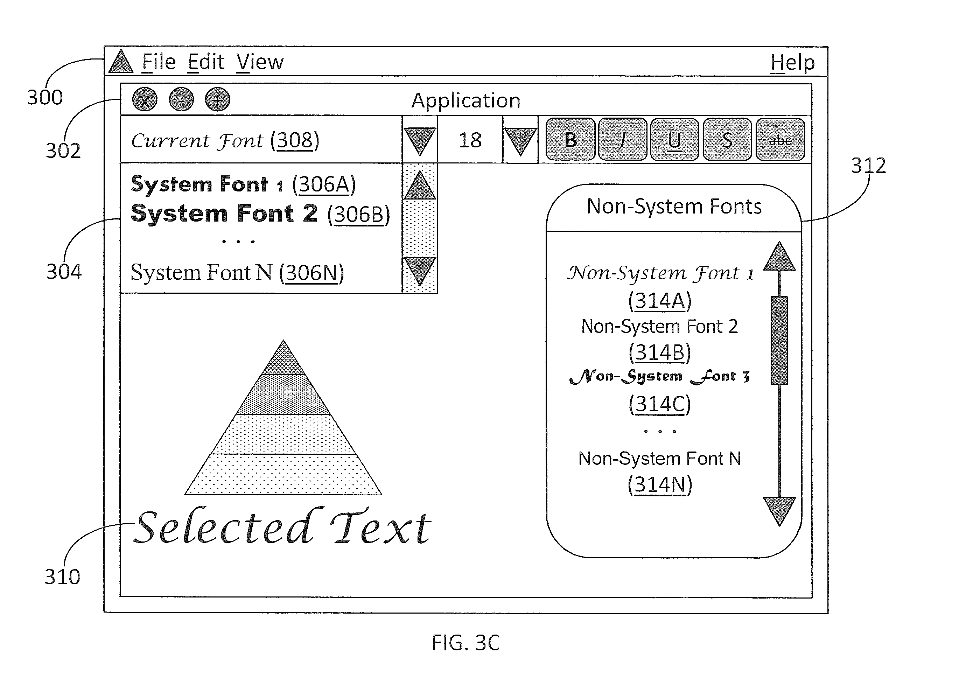

Referring to FIG. 3B, having enabled non-system font **314A,** font management module **112** may notify one or more of applications **110** of the availability of non-system font **314A.** For example, font management module **112** may make one or more API calls to one or more of applications **110** indicating the availability of non-system font **314A.** In response to such a notification, one or more of applications **110** (*e.g.*, one or more of applications **110** associated with application UI **302)** may update one or more of system fonts menu **304** and non-system fonts menu **312** to reflect the availability or selection of non-system font **314A.** For example, system fonts menu **304** may update current font **308** to reflect that the current font is non-system font **314A.** Referring to FIG. 3C, font-management module **112** or one or more of applications **110** (*e.g*., one or more of applications **110** associated with application UI **302)** may apply non-system font **314A** to selected text **310.** In some embodiments, font management module **112** may make one or more API calls to one or more of applications **110** indicating that non-system font **314A** should be applied to selected text **310.**

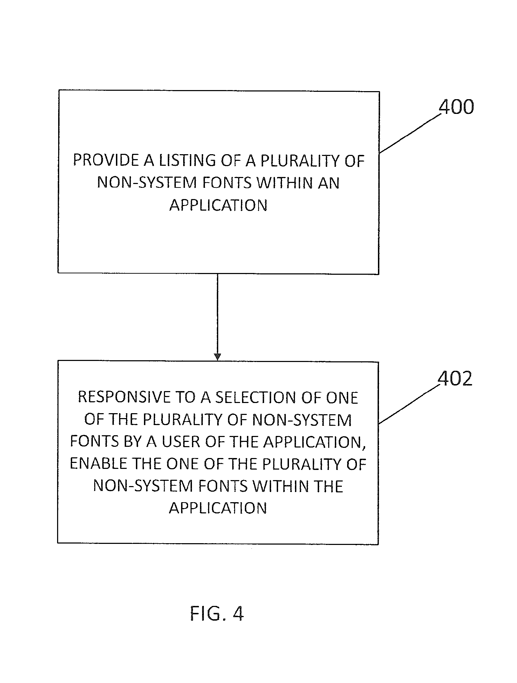

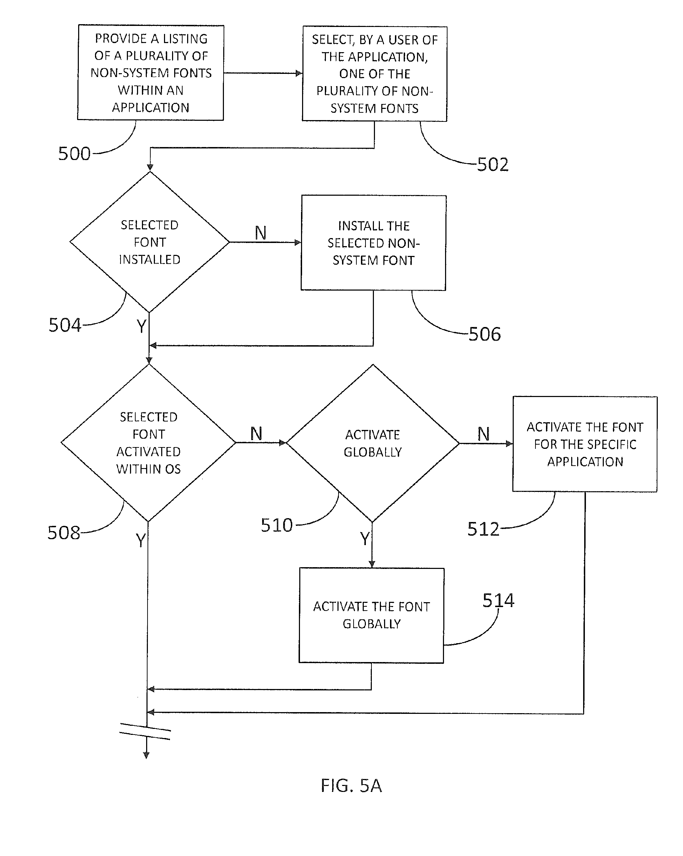

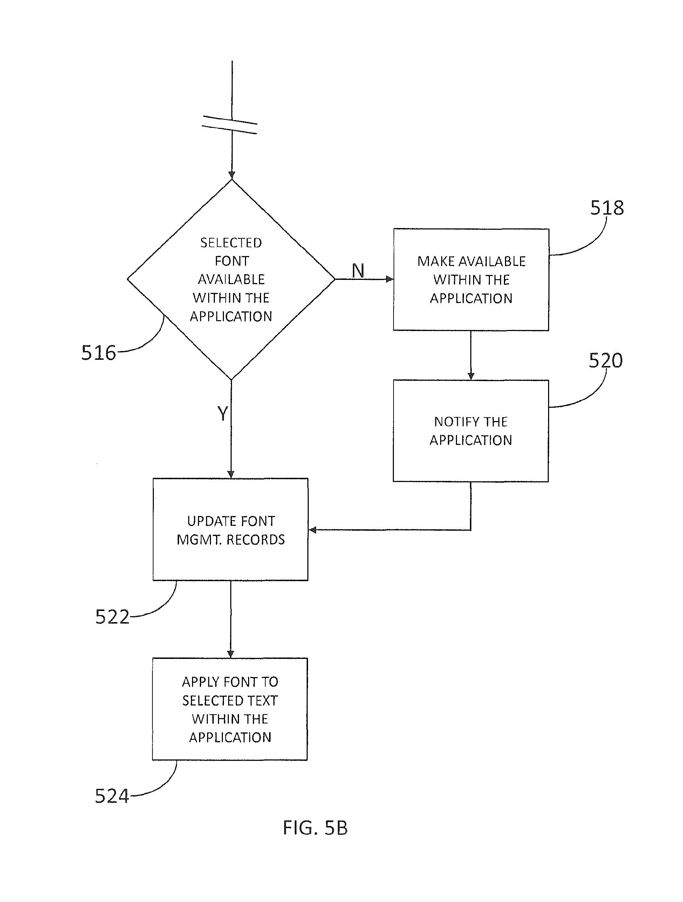

FIGS. 4, 5A, and 5B illustrate one or more methods according to one or more aspects of the disclosure.

Referring to FIG. 4, at step **400** a listing of a plurality of non-system fonts may be provided within an application. For example, font management module **112** may provide a listing of non-system fonts **314A, 314B,** and **314C** through **314N** within one of applications **110** corresponding to application UI **302** via non-system font menu **312.** At step **402,** responsive to a selection of one of the plurality of non-system fonts by a user of the application, the one of the plurality of non-system fonts may be enabled within the application. For example, a user of computer **100** may select non-system font **314A** from non-system font menu **312** and font management module **112** may enable non-system font **314A** within the one of applications **110** corresponding to application UI **302.**

Referring to FIG. 5A, at step **500** a listing of a plurality of non-system fonts may be provided within an application. For example, font management module **112** may provide a listing of non-system fonts **314A, 314B,** and **314C** through **314N** within one of applications **110** corresponding to application UI **302** via non-system font menu **312.** At step **502**, a user of the application may select one of the plurality of non-system fonts. For example, a user of computer **100** may select non-system font **314A** from non-system font menu **312.** At step **504** a determination may be made as to whether the selected non-system font is installed. For example, font management module **112** may determine whether non-system font **314A** is installed. In response to determining that the selected non-system font is not installed, at step **506,** the selected non-system font may be installed. For example, in response to font management module **112** determining that non-system font **314A** is not installed, font management module **112** may install non-system font **314A** and the method may proceed to step **508.** In response to determining that the selected non-system font is installed, the method may proceed to step **508.** For example, font management module **112** may determine that non-system font **314A** is installed and the method may proceed to step **508.** At step **508,** a determination may be made as to whether the selected non-system font is activated within the OS. For example, font management module **112** may determine whether non-system font **314A** is activated within OS **104.** In response to determining that the selected non-system font is not activated within the OS, at step **510,** a determination may be made as to whether the selected non-system font should be activated globally or on an application-specific basis. For example, font management module **112** may determine that non-system font **314A** is not activated within OS **104** and a determination may be made as to whether non-system font **314A** should be activated globally within OS **104** or on an application specific basis (*e.g.*, activated specifically for one or more of applications **110** associated with application UI **302).** In response to determining that the selected non-system font should be activated on an application-specific basis, at step **512,** the selected non-system font may be activated for one or more applications and the method may proceed to step **516.** For example, in response to font management module **112** determining that non-system font **314A** should be activated for one or more of applications **110** associated with application UI **302,** font management module **112** may activate non-system font **314A** for the one or more of applications **110** associated with application UI **302** and the method may proceed to step **516.** In response to determining that the selected non-system font should be activated globally, at step **514,** the selected non-system font may be activated globally and the method may proceed to step **516.** For example, in response to font management module **112** determining that non-system font **314A** should be activated globally within OS **104,** font management module **112** may activate non-system font **314A** globally within OS **104** and the method may proceed to step **516.** Returning to step **508,** in response to determining that the selected non-system font is activated within the OS, the method may proceed to step **516.**

Referring to FIG. 5B, at step **516,** a determination may be made as to whether the selected non-system font is available within the application. For example, font management module **112** may determine whether non-system font **314A** is available within one or more of applications **110** associated with application UI **302.** In response to determining that the selected non-system font is not available within the application, at step **518,** the selected non-system font may be made available within the application; at step **520,** the application may be notified of the availability of the selected non-system font; and the method may proceed to step **522.** For example, in response to font management module **112** determining that non-system font **314A** is not available within the one or more of applications **110** associated with application UI **302,** font management module **112** may make non-system font **314A** available within the one or more of applications **110** associated with application UI **302** and font management module **112** may notify the one or more of applications **110** associated with application UI **302**that non-system font **314A** is available. In response to determining that the selected non-system is available within the application, the method may proceed to step **522.** For example, in response to font management module **112** determining that non-system font **314A** is available within the one or more of applications **110** associated with application UI **302,** the method may proceed to step **522.** At step **522,** one or more font management records may be updated to reflect the selection, installation, activation, or availability of the selected non-system font. For example, font management module **112** may update one or more font management records associated with non-system font **314A** to reflect that non-system font **314A** was selected by a user of computer **100,** is installed alongside non-system fonts **114,** is activated (*e.g.*, globally within OS **104** or on an application-specific basis for the one or more of applications **110** associated with application UI **302),** or available within the one or more of applications **110** associated with application UI **302.** At step **524,** the selected non-system font may be applied to selected text within the application. For example, font management module **112** may apply non-system font **314A** to selected text **310** within the one or more of applications **110** associated with application UI **302.**

One or more aspects of the disclosure may be embodied in computer-usable data or computer-executable instructions, such as in one or more program modules, executed by one or more computers or other devices to render one or more fonts for output on a device such as a display or a printer. Generally, program modules include routines, programs, objects, components, data structures, etc. that perform particular tasks or implement particular abstract data types when executed by one or more processors in a computer or other data processing device. The computer-executable instructions may be stored on a computer-readable medium such as a hard disk, optical disk, removable storage media, solid state memory, RAM, etc. As will be appreciated, the functionality of the program modules may be combined or distributed as desired in various embodiments. In addition, the functionality may be embodied in whole or in part in firmware or hardware equivalents, such as integrated circuits, application-specific integrated circuits (ASICs), field programmable gate arrays (FPGA), and the like. Particular data structures may be used to more effectively implement one or more aspects of the disclosure, and such data structures are contemplated to be within the scope of computer executable instructions and computer-usable data described herein.

Although not required, one of ordinary skill in the art will appreciate that various aspects described herein may be embodied as a method, an apparatus, or as one or more computer-readable media storing computer-executable instructions. Accordingly, those aspects may take the form of an entirely hardware embodiment, an entirely software embodiment, an entirely firmware embodiment, or an embodiment combining software, hardware, and firmware aspects in any combination. In addition, various signals representing data or events as described herein may be transferred between a source and a destination in the form of light or electromagnetic waves traveling through signal-conducting media such as metal wires, optical fibers, or wireless transmission media (e.g., air or space). In general, the one or more computer-readable media may comprise one or more transitory or non-transitory computer-readable media.

As described herein, the various methods and acts may be operative across one or more computing servers and one or more networks. The functionality may be distributed in any manner, or may be located in a single computing device (e.g., a server, a client computer, etc.).

Aspects of the disclosure have been described in terms of illustrative embodiments thereof. Numerous other embodiments, modifications, and variations within the scope and spirit of the appended claims will occur to persons of ordinary skill in the art from a review of this disclosure. For example, one of ordinary skill in the art will appreciate that the steps illustrated in the illustrative figures may be performed in other than the recited order, and that one or more steps illustrated may be optional in accordance with aspects of the disclosure.

## Claims

1. A method, comprising:
providing a listing of a plurality of non-system fonts within an application; and
responsive to a selection of one of the plurality of non-system fonts by a user of the application, enabling the one of the plurality of non-system fonts within the application.

2. The method of claim 1, further comprising notifying the application to update a system fonts menu associated with the application to include the one of the plurality of non-system fonts.

3. The method according to any of claims 1 or 2, further comprising applying the one of the plurality of non-system fonts to text within the application selected by the user of the application.

4. The method according to any of claims 1-3, wherein enabling the one of the plurality of non-system fonts within the application comprises activating the one of the plurality of non-system fonts within an operating system on which the application is running.

5. The method of claim 4, wherein activating the one of the plurality of non-system fonts within the operating system on which the application is running comprises activating the one of the plurality of non-system fonts globally within the operating system on which the application is running.

6. The method of claim 4, wherein activating the one of the plurality of non-system fonts within the operating system on which the application is running comprises activating the one of the plurality of non-system fonts on an application specific basis for use specifically within the application.

7. The method according to any of claims 1-3, wherein enabling the one of the plurality of non-system fonts within the application comprises installing the one of the plurality of non-system fonts within an operating system on which the application is running.

8. The method according to any of claims 1-3, wherein providing the listing of the plurality of non-system fonts within the application comprises displaying the listing of the plurality of non-system fonts as part of a system fonts menu associated with the application.

9. The method according to any of claims 1-8, wherein providing the listing of the plurality of non-system fonts within the application comprises displaying the listing of the plurality of non-system fonts in a menu distinct from a system fonts menu associated with the application.

10. The method according to any of claims 1-3, wherein the one of the plurality of non-system fonts is a font distinct from one or more fonts provided with an operating system on which the application is running.

11. One or more non-transitory computer-readable media having instructions stored thereon, that when executed by one or more computers, perform a method according to any of claims 1-10.

12. An apparatus, comprising:
at least one processor; and
memory storing instructions that, when executed by the at least one processor, cause the apparatus to perform:
providing a listing of a plurality of non-system fonts within an application; and
responsive to a selection of one of the plurality of non-system fonts by a user of the application, enabling the one of the plurality of non-system fonts within the application.

13. The apparatus of claim 12, wherein providing the listing of the plurality of non-system fonts within the application comprises displaying the listing of the plurality of non-system fonts as part of a system fonts menu associated with the application.

14. The apparatus of claim 12, wherein the one of the plurality of non-system fonts is a font distinct from one or more fonts provided with an operating system on which the application is running.

15. The apparatus of claim 12, wherein enabling the one of the plurality of non-system fonts within the application comprises activating the one of the plurality of non-system fonts within an operating system on which the application is running.
